(19) Europäisches Patentamt
European Patent Office
Office européen des brevets

(11) EP 4 542 454 A1

(12) EUROPEAN PATENT APPLICATION
published in accordance with Art. 153(4) EPC

(43) Date of publication:
23.04.2025 Bulletin 2025/17

(51) International Patent Classification (IPC):
G06N 10/00 (2022.01)    G06N 99/00 (2019.01)

(21) Application number: 22946829.3

(22) Date of filing: 15.06.2022

(52) Cooperative Patent Classification (CPC):
G06N 10/00; G06N 99/00

(86) International application number:
PCT/JP2022/024000

(87) International publication number:
WO 2023/243011 (21.12.2023 Gazette 2023/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: FUJITSU LIMITED
Kawasaki-shi, Kanagawa 211-8588 (JP)

(72) Inventor: TAKAHASHI, Norihiko
Kawasaki-shi, Kanagawa 211-8588 (JP)

(74) Representative: Haseltine Lake Kempner LLP
Cheapside House
138 Cheapside
London EC2V 6BJ (GB)

(54) INFORMATION PROCESSING PROGRAM, INFORMATION PROCESSING METHOD, AND INFORMATION PROCESSING DEVICE

(57) A VQE calculation time is shortened. An information processing device (10), which is configured to execute update processing of a parameter applied to a variational quantum circuit (1) for VQE calculation multiple times, determines a value of a coefficient used in the update processing of the parameter for each time, as a value that periodically changes to a value higher than a reference value and a value lower than the reference value with an increase in the number of times of update indicating how many times the update processing is performed. In the update processing executed the multiple times, the device (10) determines a change amount of the value of the parameter according to the value of the coefficient determined for the number of times of update of the update processing to be executed, and updates the value of the parameter to a value changed by the determined change amount.

FIG. 1

**Description**

FIELD

The present invention relates to an information processing program, an information processing method, and an information processing device.

BACKGROUND

As a method for performing quantum chemical calculation using a quantum computer or a simulator, there is a variational quantum eigensolver (VQE) algorithm. This VQE algorithm is used to obtain, for example, an energy value of a ground state of a substance.

In the quantum chemical calculation (VQE calculation) by the VQE algorithm, for example, the quantum computer measures an expected value of a quantum state using a variational quantum circuit parameterized by a plurality of parameters $\theta$. An expected value of energy is obtained from the expected value of the quantum state. A classical computer performs adjustment processing of the parameters $\theta$ so as to lower the energy based on the expected value of the quantum state. Such adjustment processing of the parameters $\theta$ is referred to as optimization processing. The quantum computer generates the quantum state using the optimized parameters $\theta$, and measures the expected value again. The quantum computer and the classical computer repeat the measurement of the expected value of the quantum state and the parameter optimization until the energy converges.

As a technology related to quantum calculation, a quantum calculation device has been proposed that may execute a quantum variational algorithm even when, for example, an error rate of the quantum calculation device is not a sufficiently small value. Furthermore, a technology related to generation of trial states for a VQE has also been proposed. Furthermore, a quantum optimization method has also been proposed that estimates, on a classical computer and for a quantum state, an expected value of a Hamiltonian, expressible as a linear combination of observables, based on expected values of the observables, and transforms, on the classical computer, one or both of the Hamiltonian and the quantum state. Moreover, a technology for facilitating quantum calculation of Monte Carlo minimization has also been proposed.

SUMMARY

TECHNICAL PROBLEM

In the VQE calculation, when change amounts of values of the parameters for each optimization processing are too large, there is a possibility that the values of the parameters greatly deviate from an ideal transition process for reaching an energy minimum value and the energy does not converge correctly. Therefore, conventionally, the change amounts of the values of the parameters for each optimization processing are made sufficiently small, and the optimization processing is performed. However, when the change amounts of the values of the parameters for each optimization processing is small, there is only a small reduction in the energy, and the number of times of repetition of the processing until convergence increases. Therefore, a time needed for the VQE calculation is prolonged.

In one aspect, an object of the present case is to shorten a VQE calculation time.

SOLUTION TO PROBLEM

In one proposal, there is provided an information processing program that causes a computer to execute update processing of a value of a parameter applied to a variational quantum circuit used for VQE calculation a plurality of times.

The computer determines a value of a coefficient used in the update processing of the value of the parameter for each update processing as a value that periodically changes to a value higher than a predetermined reference value and a value lower than the predetermined reference value with an increase in the number of times of update indicating how many times the update processing is performed. Then, in the update processing executed the plurality of times in the VQE calculation, the computer updates the value of the parameter to a value changed from the value of the parameter before the update by a change amount according to the value of the coefficient determined for the number of times of update of the update processing to be executed.

ADVANTAGEOUS EFFECTS OF INVENTION

According to one aspect, a VQE calculation time is shortened.

The object described above and other objects, features, and advantages of the present invention will become clear from the following description related to the appended drawings, which represent preferred embodiments as examples of the present invention.

BRIEF DESCRIPTION OF DRAWINGS

FIG. 1 is a diagram illustrating an example of an information processing method according to a first embodiment.
FIG. 2 is a diagram illustrating an example of a system configuration of a second embodiment.
FIG. 3 is a diagram illustrating an example of hardware of a classical computer.
FIG. 4 is a diagram illustrating an example of a variational quantum circuit.
FIG. 5 is a block diagram illustrating an example of functions of the classical computer for VQE calculation.
FIG. 6 is a flowchart illustrating an example of a procedure of VQE calculation processing.
FIG. 7 is a diagram illustrating an example of VQE calculation of energy of a hydrogen molecule.
FIG. 8 is a diagram illustrating an example of a change situation of a step size.
FIG. 9 is a diagram illustrating an example of a relationship between m and the number of times of optimization.

DESCRIPTION OF EMBODIMENTS

Hereinafter, the present embodiments will be described with reference to the drawings. Note that each of the embodiments may be implemented in combination with the plurality of embodiments as long as no contradiction arises.

[First Embodiment]

A first embodiment is an information processing method of reducing the number of times of repetition of optimization by accelerating convergence of energy in VQE calculation and shortening a calculation time.

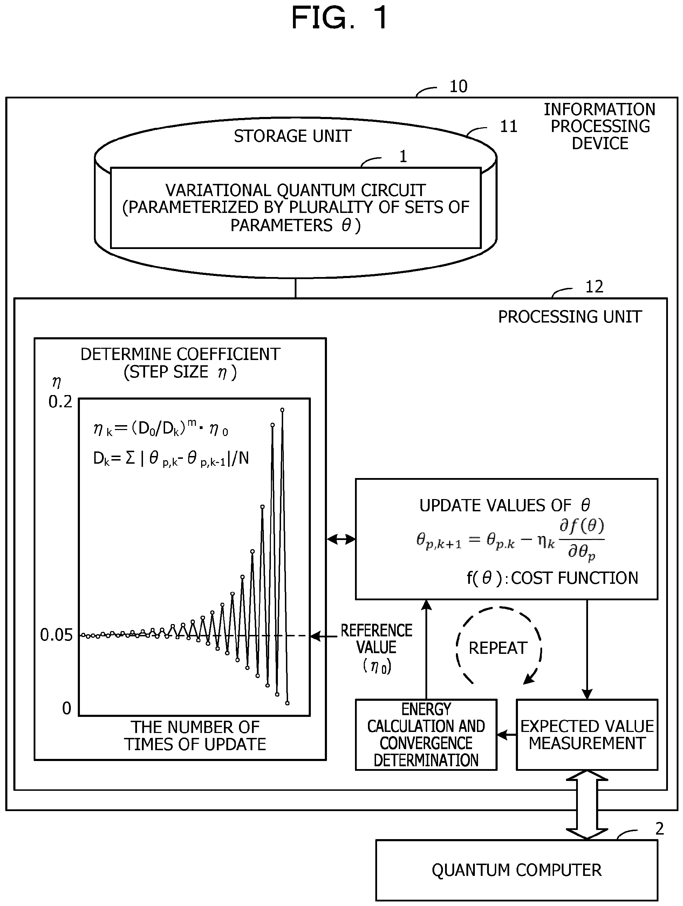

FIG. 1 is a diagram illustrating an example of the information processing method according to the first embodiment. In FIG. 1, an information processing device 10 that implements the information processing method is illustrated. The information processing device 10 may implement the information processing method by, for example, executing an information processing program.
The information processing device 10 includes a storage unit 11 and a processing unit 12. The storage unit 11 is, for example, a memory or a storage device included in the information processing device 10. The processing unit 12 is, for example, a processor or an arithmetic circuit included in the information processing device 10.
The storage unit 11 stores a variational quantum circuit 1 corresponding to a quantum many-body system to be solved by VQE calculation. The variational quantum circuit 1 is parameterized by, for example, a plurality of sets of parameters $\theta$ ($\theta_1$, $\theta_2$,...).
The processing unit 12 performs VQE calculation. In the VQE calculation, the processing unit 12 uses, for example, a quantum computer 2 to measure an expected value of a quantum state by the variational quantum circuit 1 to which values of the parameters at that time are applied. The processing unit 12 calculates energy of a quantum many-body system based on the expected value of the quantum state. The processing unit 12 determines whether or not the calculated energy satisfies a predetermined convergence condition, and when not, updates values of the plurality of sets of parameters $\theta$ in a direction in which the energy decreases. Such updating of the values of the plurality of sets of parameters $\theta$ is referred to as parameter optimization. The processing unit 12 repeatedly executes the expected value measurement and the parameter optimization using the quantum computer 2 until the energy satisfies the convergence condition.
In such VQE calculation, the processing unit 12 dynamically changes, with progress of the VQE calculation, a coefficient for adjusting magnitude of a change in the values of the plurality of sets of parameters $\theta$ in the parameter optimization. The coefficient is, for example, a step size $\eta$. The step size $\eta$ is, for example, a training ratio in a gradient descent method.
For example, the processing unit 12 determines a value of the coefficient used in the update processing of the values of the parameters applied to the variational quantum circuit 1 for each update processing as a value that periodically changes to a value higher than a predetermined reference value and a value lower than the predetermined reference value with an increase in the number of times of update indicating how many times the update processing is performed. When the number of times of update is set to k (k is a natural number), the value of the coefficient for each value of the number of times of update k is determined.
In the example of FIG. 1, the reference value ($\eta_0$) is "0.05". Additionally, with the increase in the number of times of update, the value of the coefficient corresponding to each number of times of update periodically changes to a value higher than "0.05" and a value lower than "0.05". A change cycle of the value of the coefficient may be, for example, one cycle with a constant number of times of update. In the example of FIG. 1, two times of the update processing constitute one cycle. In this case, a value higher than the reference value and a value lower than the reference value are alternately repeated every time the number of times of update increases by one.

The processing unit 12 may dynamically calculate the value of the coefficient for each update processing in the VQE calculation process. For example, when k-th first update processing of the values of the parameter is performed in the VQE calculation process, the processing unit 12 calculates a value of the coefficient to be used in (k + 1)-th second update processing based on first change amounts of the values of the parameter in the first update processing.

Note that, based on an average value of the first change amounts of the respective values of the parameters of the plurality of sets of parameters $\theta$ ($\theta_1$, $\theta_2$,...) in the first update processing, the processing unit 12 calculates the value of the coefficient to be used in common for determination of the updated values of the plurality of parameters in the next second update processing. The average value of the first change amounts in the k-th update processing is represented as, for example, "$D_k = \Sigma|\theta_{p,w} - \theta_{p,k-1}|/N$" ($\theta_{p,w}$ is a value of a p-th parameter in the number of times of update k, and N is the number of parameters). "$|\theta_{p,k} - \theta_{p,k-1}|$" is the change amounts of the values of the parameters in the k-th update processing (difference in the values of the parameters before and after the update).

The value of the coefficient (step size $n_k$) used in the (k + 1)-th update processing is represented as, for example, "$\eta_k = (D_0/D_k)^m \cdot \eta_0$" ($D_0$ and m are predetermined real numbers).

In the update processing repeatedly executed in the VQE calculation process, the processing unit 12 determines the change amounts of the values of the parameters based on the value of the coefficient determined for the number of times of update of the update processing to be executed. For example, the processing unit 12 increases the change amounts of the values of the parameters as the value of the coefficient increases. Then, the processing unit 12 updates the values of the parameters to values changed from the values of the parameters before the update by the determined change amounts.

For example, the processing unit 12 determines, as the change amounts, a product ($\eta_k(\partial f(\theta)\partial\theta_p)$) of a gradient of a cost function ($f(\theta)$) according to the values of the parameters before the update and the value of the coefficient. The cost function is, for example, a function whose value decreases as the energy of the quantum many-body system to be solved decreases.

By dynamically changing the coefficient for each update processing of the parameters of the VQE calculation in this manner, it is possible to reduce the number of times of repetition of the optimization by converging the energy at an early stage. In other words, in a case where the value of the coefficient is too large, the values of the parameters change too much in one time of the update processing, and there is a possibility that the optimization is not successful. On the other hand, in a case where the value of the coefficient is too small, the change amounts of the values of the parameters become too small, and the number of times of repetitive processing including the update processing increases. The processing unit 12 periodically changes the value of the coefficient to a value larger than the reference value and a value smaller than the reference value. As a result, when the value of the coefficient becomes a value larger than the reference value, convergence of the energy is accelerated, and the number of times of the repetitive processing (including the parameter optimization and the expected value measurement) is reduced. Furthermore, since the update processing in which the value of the coefficient is set to a value smaller than the reference value is sandwiched in one cycle, it is possible to avoid that a situation where the change amounts of the values of the parameters are large continues, and it is possible to suppress a significant deviation from a path of the parameter optimization.

Furthermore, by determining the product of the gradient of the cost function according to the values of the parameters before the update and the value of the coefficient as the change amounts of the parameters, the larger the value of the coefficient, the larger the change amounts of the parameters. As a result, the change amounts of the parameters may be appropriately adjusted by changing the value of the coefficient.

Furthermore, the processing unit 12 calculates the value of the coefficient to be used in the (k + 1)-th update processing based on the change amounts of the values of the parameters in the k-th update processing. For example, the processing unit 12 decreases the value of the coefficient to be used in the (k + 1)-th update processing as the change amounts of the values of the parameters in the k-th update processing are larger. As a result, the value of the coefficient that periodically changes to a value higher than the reference value and a value lower than the reference value may be dynamically calculated in the VQE calculation process.

Furthermore, a calculation load of the value of the coefficient may be reduced by calculating the value of the coefficient to be used in common for determination of the updated values of the plurality of parameters in the second update processing based on the average value of the first change amounts of the respective values of the plurality of parameters.

Moreover, by determining the value of the coefficient for each number of times of update to a value in which a value higher than the reference value and a value lower than the reference value are alternately repeated every time the number of times of update increases by one, for example, a situation where the change amounts of the values of the parameters are large and a situation where the change amounts of the values of the parameters are small may be alternately generated for each repetitive processing of the VQE calculation. As a result, it is possible to suppress that the values of the parameters deviate from the path of the optimization due to continuous situations where the change amounts of the values of the parameters are large. Moreover, it is possible to appropriately generate the situation where the change amounts of the values of the parameters become large and to accelerate convergence of the energy.

[Second Embodiment]

A second embodiment shortens a VQE calculation time by accelerating convergence of energy in VQE calculation using a quantum computer. Note that, in the second embodiment, processing of updating values of a plurality of sets of parameters $\theta$ so as to reduce energy of a quantum many-body system is referred to as optimization processing. The number of times of execution of the optimization processing in a VQE calculation process is referred to as the number of times of optimization. Furthermore, a coefficient for adjusting change amounts of the plurality of sets of parameters $\theta$ in the optimization processing is referred to as a step size.

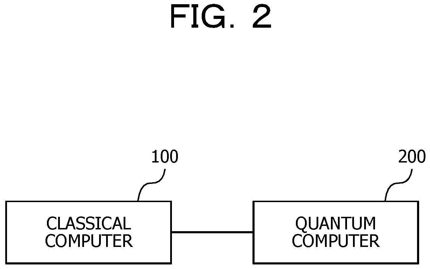

FIG. 2 is a diagram illustrating an example of a system configuration of the second embodiment. A classical computer 100 and a quantum computer 200 are coupled by a network. The classical computer 100 is a von Neumann computer. The classical computer 100 performs processing such as parameter optimization calculation in the VQE calculation. The quantum computer 200 is a quantum-gate-type quantum computer that performs desired calculation by operating a state of a qubit based on a quantum circuit. In the VQE calculation, the quantum computer 200 obtains, based on a variational quantum circuit, an expected value of a quantum state indicated by the variational quantum circuit according to a value of a specified parameter.

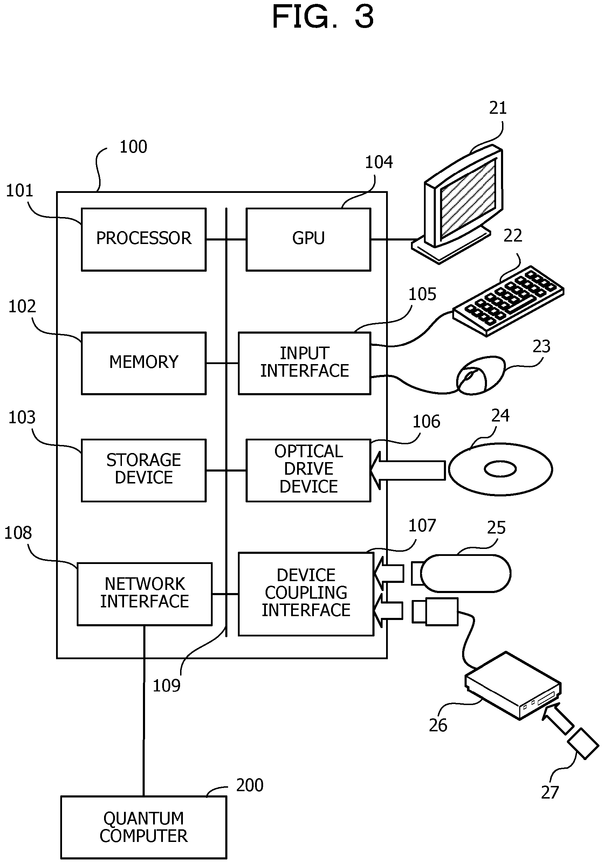

FIG. 3 is a diagram illustrating an example of hardware of the classical computer. The entire device of the classical computer 100 is controlled by a processor 101. A memory 102 and a plurality of peripheral devices are coupled to the processor 101 via a bus 109. The processor 101 may be a multiprocessor. The processor 101 is, for example, a central processing unit (CPU), a micro processing unit (MPU), or a digital signal processor (DSP). At least a part of functions implemented by the processor 101 executing a program may be implemented by an electronic circuit such as an application specific integrated circuit (ASIC) or a programmable logic device (PLD).

The memory 102 is used as a main storage device of the classical computer 100. In the memory 102, at least a part of an operating system (OS) program and an application program to be executed by the processor 101 is temporarily stored. Furthermore, in the memory 102, various types of data to be used in processing by the processor 101 are stored. As the memory 102, for example, a volatile semiconductor storage device such as a random access memory (RAM) is used.

Examples of the peripheral devices coupled to the bus 109 include a storage device 103, a graphics processing unit (GPU) 104, an input interface 105, an optical drive device 106, a device coupling interface 107, and a network interface 108.

The storage device 103 electrically or magnetically writes and reads data to and from a built-in recording medium. The storage device 103 is used as an auxiliary storage device of the classical computer 100. In the storage device 103, an OS program, an application program, and various types of data are stored. Note that, as the storage device 103, for example, a hard disk drive (HDD) or a solid state drive (SSD) may be used.

The GPU 104 is an arithmetic device that performs image processing, and is also referred to as a graphic controller. A monitor 21 is coupled to the GPU 104. The GPU 104 causes a screen of the monitor 21 to display an image according to an instruction from the processor 101. Examples of the monitor 21 include a display device using an organic electro luminescence (EL), a liquid crystal display device, and the like.

A keyboard 22 and a mouse 23 are coupled to the input interface 105. The input interface 105 transmits signals sent from the keyboard 22 and the mouse 23 to the processor 101. Note that the mouse 23 is an example of a pointing device, and another pointing device may also be used. Examples of the another pointing device include a touch panel, a tablet, a touch pad, a track ball, and the like.

The optical drive device 106 uses laser light or the like, to read data recorded in an optical disk 24, or write data into the optical disk 24. The optical disk 24 is a portable recording medium in which data is recorded in a readable manner by reflection of light. Examples of the optical disk 24 include a digital versatile disc (DVD), a DVD-RAM, a compact disc read only memory (CD-ROM), a CD-recordable (R)/rewritable (RW), and the like.

The device coupling interface 107 is a communication interface for coupling the peripheral devices to the classical computer 100. For example, a memory device 25 and a memory reader/writer 26 may be coupled to the device coupling interface 107. The memory device 25 is a recording medium equipped with a communication function with the device coupling interface 107. The memory reader/writer 26 is a device that writes data to a memory card 27 or reads data from the memory card 27. The memory card 27 is a card-type recording medium.

The network interface 108 is coupled to the quantum computer 200 via a network. The network interface 108 transmits information such as a quantum calculation request to the quantum computer 200 and receives information indicating a calculation result from the quantum computer 200. The network interface 108 is, for example, a wired communication interface coupled to a wired communication device such as a switch or a router with a cable.

The classical computer 100 may implement processing functions of the second embodiment with the hardware as described above. Note that the device indicated in the first embodiment may also be implemented by hardware similar to that of the classical computer 100 illustrated in FIG. 3.

The classical computer 100 implements the processing functions of the second embodiment by, for example, executing a program recorded in a computer-readable recording medium. The program in which processing content to be executed by the classical computer 100 is described may be recorded in various recording media. For example, the program to be executed by the classical computer 100 may be stored in the storage device 103. The processor 101 loads at least a part of the program in the storage device 103 into the memory 102, and executes the program. Furthermore, the program to be executed by the classical computer 100 may also be recorded in a portable recording medium such as the optical disk 24, the memory device 25, or the memory card 27. The program stored in the portable recording medium may be executed after being installed in the storage device 103 under control of the processor 101, for example. Furthermore, the processor 101 may also read the program directly from the portable recording medium to execute the read program.

In such a system, the classical computer 100 and the quantum computer 200 execute the VQE calculation in cooperation. The plurality of sets of parameters θ is used for the variational quantum circuit used for the VQE calculation.

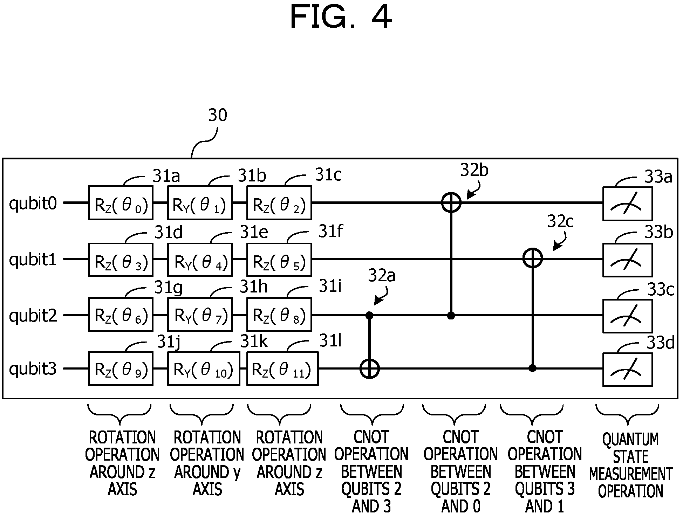

FIG. 4 is a diagram illustrating an example of the variational quantum circuit. In FIG. 4, an example of a variational quantum circuit 30 for obtaining a fiducial value of energy of a hydrogen molecule is illustrated. In the variational quantum circuit 30, operations for four qubits (qubits 0 to 3) are illustrated. A gate operation for the qubit is illustrated on a horizontal line associated with each qubit. When the quantum computer 200 performs quantum calculation, the gate operation set for each qubit is executed in order from the left.

One-qubit gates 31a to 31l are quantum gates that perform a rotation operation around a predetermined axis by a specified angle. It is illustrated that the variational quantum circuit 30 executes, for each qubit, a rotation operation around a z axis, a rotation operation around a y axis, and a rotation operation around the z axis in order.

Rotation angles of the one-qubit gates 31a to 31l are indicated by the plurality of sets of parameters θ ($\theta = \{\theta_1, \theta_2, ...\}$). The rotation angles of the one-qubit gates 31a to 31c to act on the first qubit (qubit 0) are respectively $\theta_0$, $\theta_1$, and $\theta_2$. The rotation angles of the one-qubit gates 31d to 31f to act on the second qubit (qubit 1) are respectively $\theta_3$, $\theta_4$, and $\theta_5$. The rotation angles of the one-qubit gates 31g to 31i to act on the third qubit (qubit 2) are respectively $\theta_6$, $\theta_7$, and $\theta_8$. The rotation angles of the one-qubit gates 31j to 31l to act on the fourth qubit (qubit 3) are respectively $\theta_9$, $\theta_{10}$, and $\theta_{11}$.

After the rotation operation around the predetermined axis, gate operations by two-qubit gates 32a, 32b, and 32c are performed. The two-qubit gate 32a is a CNOT gate indicating a CNOT operation between the third and fourth qubits. In this CNOT gate, the third qubit is a control qubit, and the fourth qubit is a target qubit. The two-qubit gate 32b is a CNOT gate indicating a CNOT operation between the third and first qubits. In this CNOT gate, the third qubit is a control qubit, and the first qubit is a target qubit. The two-qubit gate 32c is a CNOT gate indicating a CNOT operation between the fourth and second qubits. In this CNOT gate, the fourth qubit is a control qubit, and the second qubit is a target qubit.

Symbols 33a to 33d indicated at right ends of the lines corresponding to the respective qubits indicate a measurement operation of a quantum state.

In a case where the VQE calculation is performed using such a variational quantum circuit 30, for example, a gradient is used in optimization of the plurality of sets of parameters θ. Here, a value of a p-th (p is a natural number) parameter $\theta_p$ in k-th (k is a natural number) optimization processing is set to $\theta_{p,k}$. For example, $\theta_{p,k+1}$ in (k + 1)-th optimization processing in optimization may be calculated by the following Expression (1) using $\theta_{p,w}$.

[Expression 1]

$$\theta_{p,k+1} = \theta_{p,k} - \eta \frac{\partial f(\theta)}{\partial \theta_p} \qquad (1)$$

The reference η is a parameter (step size) for determining a weight of a numerical value to be updated in one time of the optimization processing. The reference η is also referred to as a training ratio. The reference f(θ) is a cost function representing the energy. The reference $\partial f(\theta)/\partial \theta_p$ is a gradient in an axial direction of the parameter $\theta_p$. The gradient is a partial differential coefficient related to the parameter $\theta_p$ at a point $(\theta_{1,k}, \theta_{2,k},...)$ of f(θ).

In the example of Expression (1), the optimization is performed while fixing a value of the step size η. However, for example, in a case where the η value is too large particularly at an initial stage of the optimization, the respective values of the plurality of sets of parameters θ change too much in one time of the optimization processing, and deviate from a path of the optimization to be originally followed, and there is a possibility that the optimization is not successful. Furthermore, in a case where the η value is too small particularly at a final stage of the optimization, the change amounts of the respective values of the plurality of sets of parameters θ are underestimated, and there is a possibility that the number of times of optimization increases.

Thus, in the optimization in the VQE calculation, the classical computer 100 changes the value of the step size η for each optimization processing as indicated in Expressions (2) and (3).

[Expression 2]

$$\theta_{p,k+1} = \theta_{p,k} - \eta_k \frac{\partial f(\theta)}{\partial \theta_p} \qquad (2)$$

[Expression 3]

$$\eta_k = \left(\frac{D_0}{D_k}\right)^m \cdot \eta_0 \qquad (3)$$

Here, the reference $\eta_k$ is a step size in the k-th optimization processing. The reference $D_0$ is a preset constant (real number). The reference $D_k$ is an average value of change amounts of the parameter $\theta_p$ in the plurality of sets of parameters $\theta$ in the k-th optimization processing. $D_k$ is obtained according to Expression (4).

[Expression 4]

$$D_k = \sum_p^N \frac{\left|\theta_{p,k} - \theta_{p,k-1}\right|}{N} \qquad (4)$$

Here, N is the number of parameters (N is a natural number). Furthermore, the reference m in Expression (3) is a preset constant (real number). Note that a value of m is selected so that the number of times of repetition of the optimization is as small as possible.

The classical computer 100 may accelerate convergence of the energy and reduce the number of times of repetition by dynamically changing the step size according to Expressions (3) and (4).

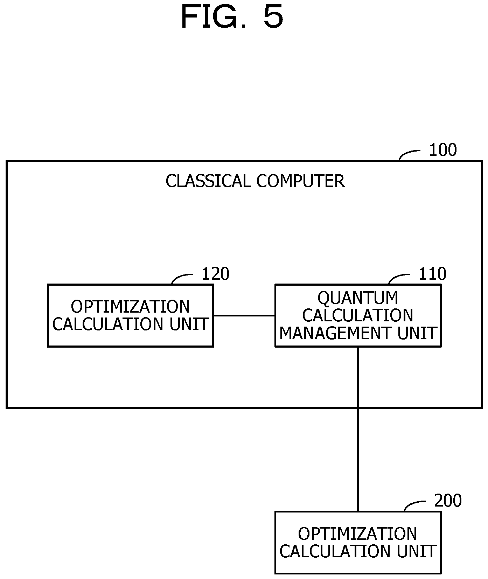

FIG. 5 is a block diagram illustrating an example of functions of the classical computer for the VQE calculation. The classical computer 100 includes a quantum calculation management unit 110 and an optimization calculation unit 120.

The quantum calculation management unit 110 generates a variational quantum circuit for calculating energy of a quantum many-body system such as a molecule, and instructs the quantum computer 200 to perform energy calculation based on the variational quantum circuit. For example, the quantum calculation management unit 110 generates a variational quantum circuit for quantum chemical calculation and sets a plurality of sets of parameters $\theta$ related to a gate operation at a quantum gate in the variational quantum circuit. The quantum calculation management unit 110 sets initial values to values of the plurality of sets of parameters $\theta$ before first energy calculation based on the variational quantum circuit. The initial value of each parameter is, for example, a value specified in advance by a user. Furthermore, as the initial value of each parameter, a random value may be used.

The quantum calculation management unit 110 acquires, from the quantum computer 200, a calculation result of the energy based on the variational quantum circuit parameterized by the plurality of sets of parameters $\theta$. When the calculation result of the energy is acquired, the quantum calculation management unit 110 determines whether or not the energy has converged. When the energy has not converged, the quantum calculation management unit 110 instructs the optimization calculation unit 120 to perform parameter optimization.

The optimization calculation unit 120 optimizes the plurality of sets of parameters $\theta$ for each optimization processing. For example, the optimization calculation unit 120 updates the values of the plurality of sets of parameters $\theta$ in a direction in which an energy value decreases. When the optimization calculation ends, the optimization calculation unit 120 notifies the quantum calculation management unit 110 of the updated values of the plurality of sets of parameters $\theta$.

Note that the function of each element illustrated in FIG. 5 may be implemented by, for example, causing a computer to execute a program module corresponding to the element.

Next, a procedure of VQE calculation processing will be described in detail.

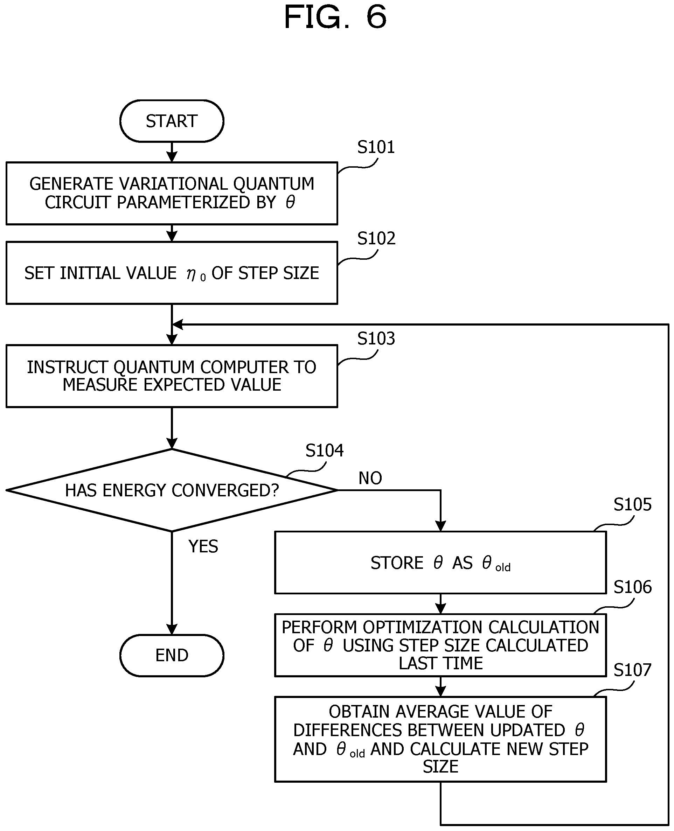

FIG. 6 is a flowchart illustrating an example of the procedure of the VQE calculation processing. Hereinafter, the processing illustrated in FIG. 6 will be described in line with step numbers.

[Step S101] The quantum calculation management unit 110 generates a variational quantum circuit parameterized by a plurality of sets of parameters $\theta = \{\theta_1, \theta_2,...\}$. The quantum calculation management unit 110 uses, for example, values specified in advance as initial values of the plurality of sets of parameters $\theta$.

[Step S102] The quantum calculation management unit 110 sets an initial value $\eta_0$ of a step size $\eta$ used in parameter optimization. The initial value $\eta_0$ is, for example, a value specified in advance.

[Step S103] The quantum calculation management unit 110 instructs the quantum computer 200 to measure an expected value. For example, the quantum calculation management unit 110 transmits the generated variational quantum circuit and values of the plurality of sets of parameters $\theta$ to the quantum computer 200, and instructs the quantum computer 200 to calculate an expected value of each qubit based on the variational quantum circuit. The quantum computer 200 measures the expected value of the qubit based on the variational quantum circuit parameterized by the plurality of sets of parameters $\theta$.

[Step S104] The quantum calculation management unit 110 determines whether or not energy has converged. For example, the quantum calculation management unit 110 calculates a value of a cost function $f(\theta)$ representing the energy, and uses a calculation result as an energy value. In a case where the energy value satisfies a predetermined convergence condition, the quantum calculation management unit 110 determines that the energy has converged. For example, the quantum calculation management unit 110 determines that the energy has converged when the energy value has reached a known value as the energy value in a ground state. Furthermore, the quantum calculation management unit 110 may determine that the energy has converged in a case where a difference between the energy value calculated this time and an energy value calculated last time is equal to or less than a predetermined threshold. In a case where the energy has converged, the quantum calculation management unit 110 outputs a solution corresponding to a state of the qubit at that time, and ends the VQE calculation processing. Furthermore, when the energy has not converged, the quantum calculation management unit 110 advances the processing to step S105.

[Step S105] The quantum calculation management unit 110 stores the plurality of sets of parameters $\theta$ in the memory 102 as $\theta_{old}$.

[Step S106] The optimization calculation unit 120 performs optimization calculation of the plurality of sets of parameters $\theta$ using a step size $\eta$ calculated last time. For example, the optimization calculation unit 120 performs calculation indicated in Expression (2). Note that, in first optimization calculation processing, the optimization calculation unit 120 sets the initial value $\eta_0$ of the preset step size $\eta$ as the step size $\eta$ to be applied. The optimization calculation unit 120 updates the values of the plurality of sets of parameters $\theta$ to values calculated by the optimization calculation.

[Step S107] The optimization calculation unit 120 calculates a new step size based on an average value of differences between the plurality of updated sets of parameters $\theta$ and $\theta_{old}$. The calculated step size is used in the next optimization calculation. Thereafter, the optimization calculation unit 120 advances the processing to step S103.

By performing the VQE calculation in this manner, the step size $\eta$ for each optimization calculation is dynamically changed, and convergence of the energy may be accelerated.

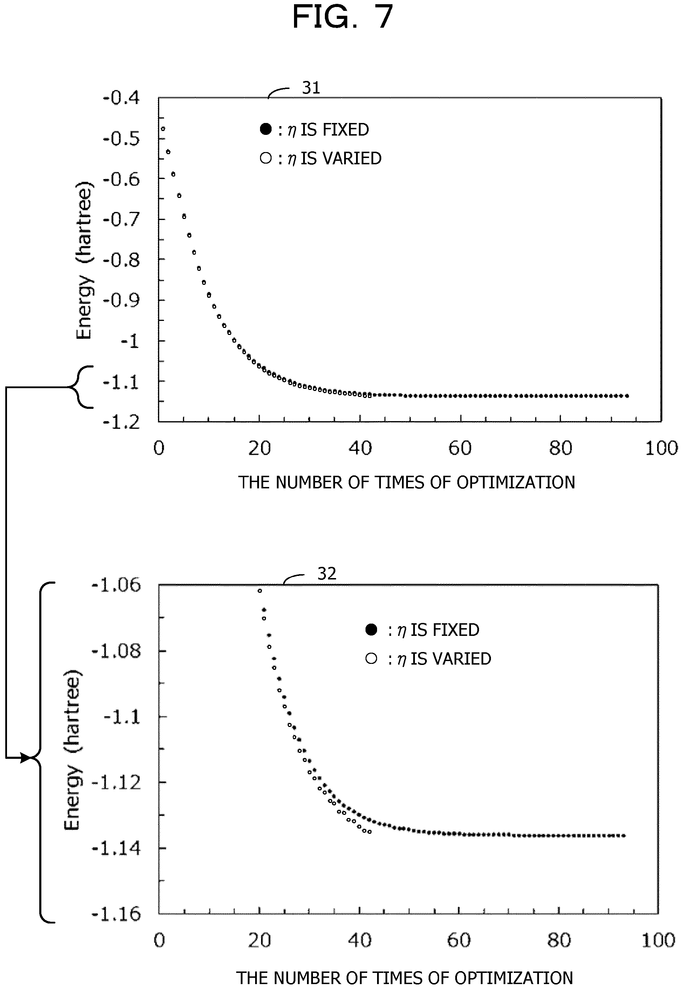

FIG. 7 is a diagram illustrating an example of VQE calculation of energy of a hydrogen molecule. In FIG. 7, results of calculating the energy of the hydrogen molecule ($H_2$) in a case where an interatomic distance is 0.7 Å by a VQE are indicated in graphs 31 and 32.

In the graphs 31 and 32, a horizontal axis represents a value indicating how many times the optimization processing is performed (the number of times of optimization), and a vertical axis represents a value of the energy. The graph 32 is obtained by enlarging a range of the energy values "-1.16" to "-1.06" of the graph 31. In the graphs 31 and 32, black circles indicate changes in the energy in a case where the step size $\eta$ is set to a fixed value, and white circles indicate changes in the energy in a case where the step size $\eta$ is varied.

The energy calculated in one time of the optimization processing decreases each time the number of times of repetition of the optimization processing increases. A rate of decrease in the energy is higher in a case where a dynamically varying value is used as the step size $\eta$ than in a case where a fixed value is used as the step size $\eta$. As a result, in a case where a fixed value is used as the step size $\eta$, the number of times of optimization when the energy has converged is "93". Furthermore, in a case where a dynamically varying value is used as the step size $\eta$, the number of times of optimization when the energy has converged is "42". By dynamically varying the step size $\eta$ in this manner, the energy has converged with a smaller number of times of optimization than in a case where the step size $\eta$ is set to a fixed value.

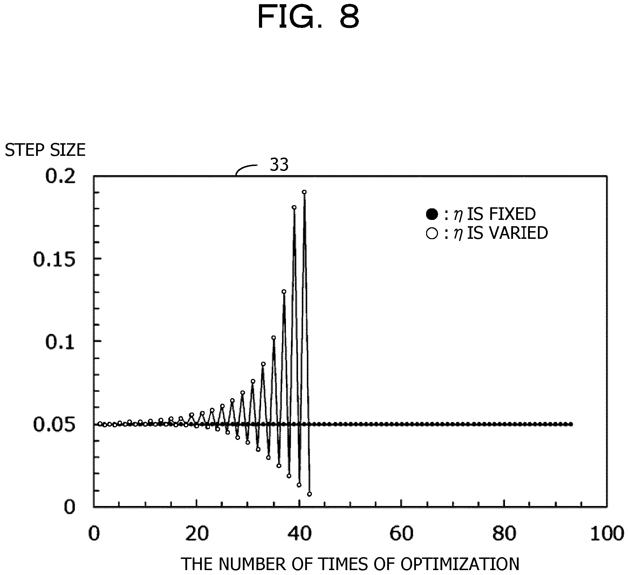

FIG. 8 is a diagram illustrating an example of a change situation of the step size. In a graph 33 illustrated in FIG. 8, a horizontal axis represents the number of times of optimization, and a vertical axis represents the step size. In the graph 33, black circles indicate changes in the step size in a case where the step size $\eta$ is set to a fixed value, and white circles indicate changes in the step size in a case where the step size $\eta$ is varied.

In the example of FIG. 8, initial values of the step size $\eta$ in both cases are "0.05". In a case where the step size $\eta$ is set to a fixed value, the step size remains "0.05" throughout the entire VQE calculation.

In a case where the step size $\eta$ is dynamically varied, a value larger than the initial value and a value smaller than the initial value of the step size $\eta$ are alternately repeated every time the number of times of optimization increases by one. Furthermore, as the number of times of optimization increases, a difference from the initial value of the step size $\eta$ increases. In other words, an amplitude of the variation of the step size $\eta$ increases with the increase in the number of times of optimization.

Here, a reason why the step size $\eta$ periodically changes will be described. The change amounts of the plurality of sets of parameters $\theta$ in the k-th optimization processing are given by the average value $D_k$ of Expression (4). In Expression (3) for obtaining the step size $\eta_k$ of the next optimization processing, since the average value $D_k$ is a denominator in parentheses of the portion $(D_0/D_k)^m$, the step size $\eta_k$ decreases as the average value $D_k$ increases. In other words, the larger the change amounts of the plurality of sets of parameters $\theta$, the smaller the step size $\eta_k$ of the next optimization processing. Then, in the next optimization processing, since the step size $\eta_k$ is small, the change amounts of the plurality of

sets of parameters $\theta$ (average value $D_k$) also become small. Then, the step size $\eta_k$ obtained by Expression (3) increases, and the change amounts of the plurality of sets of parameters $\theta$ increase. As described above, the case where the step size is small and the case where the step size is large are alternately repeated. As a result, the graph 33 as illustrated in FIG. 8 is obtained.

Meanwhile, in the VQE calculation illustrated in FIGs. 7 and 8, the value of m in Expression (3) is "0.6". As the value of m is larger, an effect of reducing the number of times of optimization may be expected. However, when the value of m is too large, the step size becomes too large and deviates from the path of the optimization, so that the energy does not converge correctly.

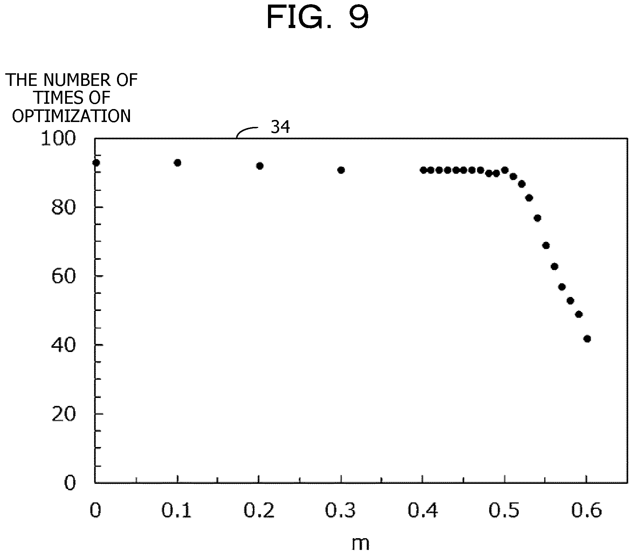

FIG. 9 is a diagram illustrating an example of a relationship between m and the number of times of optimization. A graph 34 illustrated in FIG. 9 indicates the number of times of optimization at the time of energy convergence according to the value of m. In the graph 34, a horizontal axis represents the value of m, and a vertical axis represents the number of times of optimization at the time of energy convergence.

As illustrated in FIG. 9, as the value of m gradually increases from "0", the effect of reducing the number of times of optimization also increases. When m increases to "0.6", the effect of reducing the number of times of optimization at the time of energy convergence is maximized. When m exceeds "0.6", the energy does not converge correctly, and the number of times of optimization at the time of energy convergence may not be measured. Therefore, a range of the possible value of m is "$0 \leq m \leq 0.6$".

Note that, in a case where the value of m is "0", the step size $\eta$ always remains at the initial value $\eta_0$. Therefore, the number of times of optimization at the time of energy convergence in a case where the value of m is "0" is "93" as illustrated in FIG. 7. Furthermore, the number of times of optimization at the time of energy convergence in a case where the value of m is "0.6" is "42" as illustrated in FIG. 7. In other words, the effect of reducing the number of times of optimization at the time of energy convergence by dynamically varying the step size $\eta$ is about 55% at the maximum.

In this manner, it is possible to accelerate convergence of the energy and reduce the number of times of optimization until the convergence by dynamically changing the step size in each optimization processing of the VQE calculation. As a result, a calculation time needed for the VQE calculation is also reduced. In the case of the VQE calculation of the hydrogen molecule, the number of times of repetition of the processing until energy convergence may be reduced by about 55% at the maximum, and the VQE calculation time may also be reduced to the same extent.

Since the VQE calculation time may be greatly reduced, it is possible to efficiently perform quantum chemical calculation using, for example, quantum computers having physical limitations on the number of qubits that may be used (particularly noisy intermediate-scale quantum computers (NISQs)).

[Other Embodiments]

In the second embodiment, the step size $\eta$ is calculated for each optimization processing, but the step size for each optimization processing may be preset such that the step size varies as illustrated in FIG. 8.

Furthermore, in the example of the second embodiment, a value larger than the initial value and a value smaller than the initial value of the step size $\eta$ are alternately repeated for each optimization processing. However, for example, an oscillation cycle of the step size $\eta$ may be made longer. For example, it is also possible to set four times of the optimization processing as one cycle, execute two times of the optimization processing with the step size having a value larger than the initial value, and then execute two times of the optimization processing with the step size having a value smaller than the initial value.

The above description merely indicates a principle of the present invention. Moreover, numerous modifications and variations may be made by those skilled in the art, and the present invention is not limited to the above-described or illustrated exact configuration and application example, and all corresponding modifications and equivalents are regarded to fall within the scope of the present invention by appended claims and equivalents thereof.

CITATION LIST

PATENT DOCUMENT

Patent Document 1: Japanese Laid-open Patent Publication No. 2021-26370
Patent Document 2: Japanese National Publication of International Patent Application No. 2020-534607
Patent Document 3: U.S. Patent Application Publication No. 2020/0057957
Patent Document 4: U.S. Patent Application Publication No. 2019/0384597

REFERENCE SIGNS LIST

1 Variational quantum circuit
2 Quantum computer
10 Information processing device
11 Storage unit
12 Processing unit

## Claims

1. An information processing program for causing a computer to execute update processing of a value of a parameter applied to a variational quantum circuit used for variational quantum eigensolver (VQE) calculation a plurality of times, the information processing program causing the computer to execute processing comprising:

   determining a value of a coefficient used in the update processing of the value of the parameter for each update processing as a value that periodically changes to a value higher than a predetermined reference value and a value lower than the predetermined reference value with an increase in the number of times of update that indicates how many times the update processing is performed; and
   updating, in the update processing executed the plurality of times in the VQE calculation, the value of the parameter to a value changed from the value of the parameter before the update by a change amount according to the value of the coefficient determined for the number of times of update of the update processing to be executed.

2. The information processing program according to claim 1, wherein,
   in the processing of updating the value of the parameter, the change amount is made larger as the value of the coefficient is larger.

3. The information processing program according to claim 1 or 2, wherein,
   in the processing of determining the value of the coefficient for each update processing, when k-th (k is a natural number) first update processing of the value of the parameter is performed in a process of the VQE calculation, a value of the coefficient to be used in (k + 1)-th second update processing is calculated based on a first change amount of the value of the parameter in the first update processing.

4. The information processing program according to claim 3, wherein,
   in the processing of determining the value of the coefficient for each update processing, the value of the coefficient to be used in common for determination of updated values of a plurality of the parameters in the second update processing is calculated based on an average value of the first change amounts of the respective values of the plurality of parameters.

5. The information processing program according to claim 1, wherein,
   in the processing of determining the value of the coefficient for each update processing, the value of the coefficient for each number of times of update is determined as a value that alternately repeats a value higher than the reference value and a value lower than the reference value every time the number of times of update increases by one.

6. An information processing method implemented by a computer of performing update processing of a value of a parameter applied to a variational quantum circuit used for variational quantum eigensolver (VQE) calculation a plurality of times, the information processing method comprising:

   determining a value of a coefficient used in the update processing of the value of the parameter for each update processing as a value that periodically changes to a value higher than a predetermined reference value and a value lower than the predetermined reference value with an increase in the number of times of update that indicates how many times the update processing is performed; and
   updating, in the update processing executed the plurality of times in the VQE calculation, the value of the parameter to a value changed from the value of the parameter before the update by a change amount according to the value of the coefficient determined for the number of times of update of the update processing to be executed.

7. An information processing apparatus of performing update processing of a value of a parameter applied to a variational quantum circuit used for variational quantum eigensolver (VQE) calculation a plurality of times, the information processing apparatus comprising:

   a processing unit configured to perform processing including

   determining a value of a coefficient used in the update processing of the value of the parameter for each update processing as a value that periodically changes to a value higher than a predetermined reference value and a value lower than the predetermined reference value with an increase in the number of times of update that indicates how many times the update processing is performed, and

   updating, in the update processing executed the plurality of times in the VQE calculation, the value of the parameter to a value changed from the value of the parameter before the update by a change amount according to the value of the coefficient determined for the number of times of update of the update processing to be executed.

# FIG. 1

FIG. 2

100

200

CLASSICAL COMPUTER

QUANTUM COMPUTER

# FIG. 3

PROCESSOR 101

GPU 104

MEMORY 102

INPUT INTERFACE 105

STORAGE DEVICE 103

OPTICAL DRIVE DEVICE 106

NETWORK INTERFACE 108

DEVICE COUPLING INTERFACE 107

100

109

QUANTUM COMPUTER 200

21

22

23

24

25

26

27

# FIG. 4

# FIG. 5

# FIG. 6

START

GENERATE VARIATIONAL QUANTUM CIRCUIT PARAMETERIZED BY $\theta$ — S101

SET INITIAL VALUE $\eta_0$ OF STEP SIZE — S102

INSTRUCT QUANTUM COMPUTER TO MEASURE EXPECTED VALUE — S103

HAS ENERGY CONVERGED? — S104

NO

YES

STORE $\theta$ AS $\theta_{old}$ — S105

PERFORM OPTIMIZATION CALCULATION OF $\theta$ USING STEP SIZE CALCULATED LAST TIME — S106

OBTAIN AVERAGE VALUE OF DIFFERENCES BETWEEN UPDATED $\theta$ AND $\theta_{old}$ AND CALCULATE NEW STEP SIZE — S107

END

# FIG. 7

FIG. 8

# FIG. 9

THE NUMBER OF TIMES OF OPTIMIZATION (y-axis, 0 to 100); m (x-axis, 0 to 0.6); label 34

<div align="center">

**INTERNATIONAL SEARCH REPORT**

</div>

| | International application No. |
|---|---|
| | **PCT/JP2022/024000** |

| **A.** | **CLASSIFICATION OF SUBJECT MATTER** |
|---|---|

*G06N 10/00*(2022.01)i; *G06N 99/00*(2019.01)i
FI:  G06N10/00; G06N99/00 180

According to International Patent Classification (IPC) or to both national classification and IPC

| **B.** | **FIELDS SEARCHED** |
|---|---|

Minimum documentation searched (classification system followed by classification symbols)

G06N10/00-10/80; G06N99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | HUANG, Rui et al. Learning to Learn Variational Quantum Algorithm. IEEE Transactions on Neural Networks and Learning Systems [online]. February 2022, pages 1-11, [retrieved on 26 August 2022], Internet : <URL: https://ieeexplore.ieee.org/document/9722571>, <DOI: 10.1109/TNNLS.2022.3151127> <br> entire text, all drawings | 1-7 |
| A | SMITH, Leslie N. Cyclical Learning Rates for Training Neural Networks. arXiv [online]. 2017, [retrieved on 26 August 2022], Internet : <URL: https://arxiv.org/abs/1506.01186v6> <br> entire text, all drawings | 1-7 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 August 2022** | **06 September 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**REFERENCES CITED IN THE DESCRIPTION**

**Patent documents cited in the description**

- JP 2021026370 A
- JP 2020534607 A
- US 20200057957
- US 20190384597